# EUROPÄISCHE PATENTANMELDUNG

(11) **EP 4 760 679 A1**
(43) Veröffentlichungstag der Anmeldung: **17.06.2026**
(21) Anmeldenummer: 25212711.3
(22) Anmeldetag: 31.10.2025
(51) Int. Cl.: G09F 3/10, C09J 7/38

(54) **HAFTETIKETT**

(30) Priorität: 16.12.2024 DE 102024138058
(71) Anmelder: All4Labels Group GmbH, 22969 Witzhave (DE)
(72) Erfinder: Hantel, Gero-Constantin, 22969 Witzhave (DE)
(74) Vertreter: RGTH

(57) **Zusammenfassung**

Die Erfindung betrifft ein Haftetikett (100) zur Etikettierung von Kunststoffschalen (10), insbesondere von PET-Kunststoffschalen (101), die zum Verpacken von Lebensmitteln ausgebildet sind, mit einem Obermaterial (11) und einer Beschichtung (12) aus einem Haftklebstoff (13). Erfindungsgemäß weist der Haftklebstoff (13) eine Anfangshaftung FTM9 von größer/gleich 18 N/25 mm und ein Klebstoffauftragsgewicht von größer/gleich 17 g/m² auf.

## Beschreibung

Die Erfindung betrifft ein Haftetikett zur Etikettierung von Kunststoffschalen, insbesondere von PET-Kunststoffschalen, die zum Verpacken von Lebensmitteln ausgebildet sind, mit einem Obermaterial und einer Beschichtung aus einem Haftklebstoff.

In der Nahrungsmittelindustrie werden frische kleinstückige Lebensmittel, wie beispielsweise Obst, Gemüse, Beeren und Sushi, häufig in Kunststoffschalen aus Polyethylenterephthalat (PET) verpackt und ausgeliefert. Diese PET-Schalen bestehen in der Regel aus einem Deckel und einem Boden und werden vielfach mit Lebensmitteln bestückt, die in einem Kühlbereich, insbesondere in einem Kühlbereich von Supermärkten, gelagert und den Verbrauchern angeboten werden. Zur Kennzeichnung des Inhalts, der Herkunft und zur Darstellung weiterer produktbezogener Informationen werden die Schalen herstellerseitig und/oder ausliefererseitig mit Haftetiketten etikettiert. Dabei werden nicht nur bedruckte Haftetiketten appliziert, die beispielsweise ein Markenlogo des Herstellers aufweisen (Schmucketikett), sondern auch solche Haftetiketten, die die Rückverfolgbarkeit der verpackten Produkte gewährleisten (Originalitätsnachweis) und Angaben über Inhaltsstoffe aufweisen (Pflichtangaben). Diese Informationen sind von Charge zu Charge unterschiedlich und werden daher unmittelbar beim Bestücken der Schalen auf Haftetiketten gedruckt, die aus Thermopapier oder Thermofolie bestehen und anschließend auf die Schalen appliziert werden. Zum Bedrucken dieser Haftetiketten werden üblicherweise Thermodirektdrucker oder Thermotransferdrucker verwendet.

Die Haftetiketten aus Thermopapier oder Thermofolie sind hinsichtlich des verwendeten Haftklebstoff so ausgelegt, dass sie so fest auf der PET-Schale haften, dass sie sich beim Abziehen das Etikettenpapiers spalten. Das bedeutet, dass sich das bedruckte Papier, also das bedruckte Thermopapier oder die bedruckte Thermofolie, von dem ausgehärteten Haftklebstoff löst, der im ausgehärteten Zustand auf der Schale verbleibt.

Es wird immer häufiger das Problem beobachtet, dass die applizierten Haftetiketten auf den PET-Schalen eine unzureichende Haftung besitzen und sich sogar teilweise nach wenigen Minuten nach der Applikation partiell von den Schalen ablösen, obwohl das jeweils verwendete Etiketten-Haftmaterial nicht geändert oder ausgetauscht wurde und auch die Rahmenbedingungen konstant gehalten wurde. Diesbezügliche Untersuchungen haben gezeigt, dass keine äußeren Einflüsse, wie beispielsweise Feuchtigkeit auf den PET-Schalen oder die Etiketten-Bedruckung erkennbar sind, die für diesen Ablöseeffekt ursächlich sind.

Ein frühzeitiges Ablösen der Haftetiketten führt zu dem Problem, dass ganze Chargen von frisch abgepackten Nahrungsmitteln keinen Originalitätsnachweis und/oder keine Pflichtangaben mehr aufweisen und damit auch keine Rückverfolgbarkeit mehr möglich ist. Weil sich viele der typischerweise abgepackten Lebensmittel nur wenige Tage im gekühlten Zustand halten, droht in solchen Fällen die Vernichtung ganzer Chargen von Lebensmitteln mit Verpackungen mit ablösten Haftetiketten, was regelmäßig zu einem hohen wirtschaftlichen Verlust führt.

Hiervon ausgehend ist es die Aufgabe der vorliegenden Erfindung, ein Haftetikett anzugeben, das eine dauerhafte Etikettierung von Kunststoffschalen, insbesondere von PET-Kunststoffschalen erlaubt, die zum Verpacken von Lebensmitteln, insbesondere von kleinstückigen frischen Lebensmitteln ausgestaltet sind.

Diese Aufgabe wird durch das Haftetikett nach Anspruch 1 gelöst. Erfindungsgemäß ist vorgesehen, dass der Haftklebstoff eine Anfangshaftung FTM9 von größer/gleich 18 N/25 mm und ein Klebstoffauftragsgewicht von größer/gleich 17 g/m² aufweist. Vorzugsweise ist vorgesehen, dass der Haftklebstoff eine Anfangshaftung FTM9 von größer gleich 20 N/25 mm und/oder ein Klebstoffauftragsgewicht von 18 g/m² bis 22 g/m² aufweist.

Der Erfindung liegt die gewonnene Erkenntnis zugrunde, dass die ungenügende Haftung mancher Haftetiketten auf manchen Kunststoffbehältern nicht oder zumindest kaum bei Kunststoffbehältern zu beobachten ist, die aus Virgin-PET bestehen. Demgegenüber mehren sich die Beobachtungen, dass die ungenügende Haftung mancher Haftetiketten auf manchen Kunststoffbehältern auftritt, wenn diese aus Recycling-PET bestehen. Das ist darauf zurückzuführen, dass bei der Herstellung und dem Verpacken von PET-Kunststoffschalen aus Recycling-PET Trennmittel eingesetzt werden, die auf die Oberflächen der Behälterteile aufgetragen werden, um ein Verblocken der jeweils ineinander gestapelten Deckel und/oder der jeweils ineinander gestapelten Böden zu verhindern. In gestapelter Form werden die Deckel und die Böden an die Hersteller der Nahrungsmittel geliefert, die jeweils einen Boden und einen Deckel zu einem vollständigen Kunststoffbehälter zusammensetzen. Diese Trennmittel sind weder sichtbar, noch können sie in ökonomischer Weise vor dem späteren Etikettieren entfernt werden, weshalb die PET-Schalen samt der Trennmittel mit dafür geeigneten Etiketten beklebt werden müssen. Bei Kunststoffbehältern, die aus Virgin-PET bestehen, sind Trennmittel nicht erforderlich, um das Verblocken der ineinander gestapelten Teile zu vermeiden.

Es hat sich in überraschender Weise herausgestellt, dass mit der zuvor definierten Anfangshaftung in Kombination mit dem zuvor definierten Klebstoff-Auftragsgewicht des Haftklebstoffes eine deutliche Verbesserung erreicht wird und ein Ablösen des Etiketts auch auf einer PET-Oberfläche mit Trennmittel verhindert werden kann. Mit anderen Worten, es wird durch die besondere Kombination aus der Anfangshaftung und dem Klebstoffauftragsgewicht überaschenderweise verhindert, dass sich die Haftetiketten von den Kunststoffschalen lösen, so dass eine dauerhafte Etikettierung der Kunststoffschalen gewährleistet ist. Damit wird vermieden, dass ganze Chargen von Lebensmitteln entsorgt werden müssen, weil sich deren Originalitätshinweis und/oder die Pflichtangaben von der Verpackung gelöst haben.

Vorteilhafte Weiterbildungen der Erfindung werden nachfolgend und in den Unteransprüchen angegeben.

Vorzugsweise ist vorgesehen, dass das Obermaterial zur Bedruckung mit einem Thermodirektdrucker oder einem Thermotransferdrucker ausgebildet ist. Insbesondere umfasst das Obermaterial Thermopapier oder Thermofolie oder besteht aus Thermopapier oder Thermofolie.

Vorzugsweise ist vorgesehen, dass das Obermaterial zur Bedruckung mit einem UV-Drucker ausgebildet ist. Insbesondere umfasst das Obermaterial Papier oder Folie oder besteht aus Papier oder Folie, die für den UV-Druck geeignet ist.

Vorzugsweise ist vorgesehen, dass der Haftklebstoff ein Hotmelt-Haftklebstoff, ein kautschukbasierter Haftklebstoff oder ein UV-Acryl-Hotmelt-Haftklebstoff ist oder aufweist.

Das Haftetikett weist nach einer vorteilhaften Weiterbildung im nichtapplizierten Zustand einen Abziehstreifen auf, insbesondere einen Abziehstreifen aus silikonisiertem Glassine oder aus PET.

Eine konkrete Ausführungsform der Erfindung wird nachfolgend mit Bezug auf die Figuren erläutert. Es zeigen:
- Fig. 1: ein Haftetikett im nicht applizierten Zustand und
- Fig. 2: ein Haftetikett im applizierten Zustand.

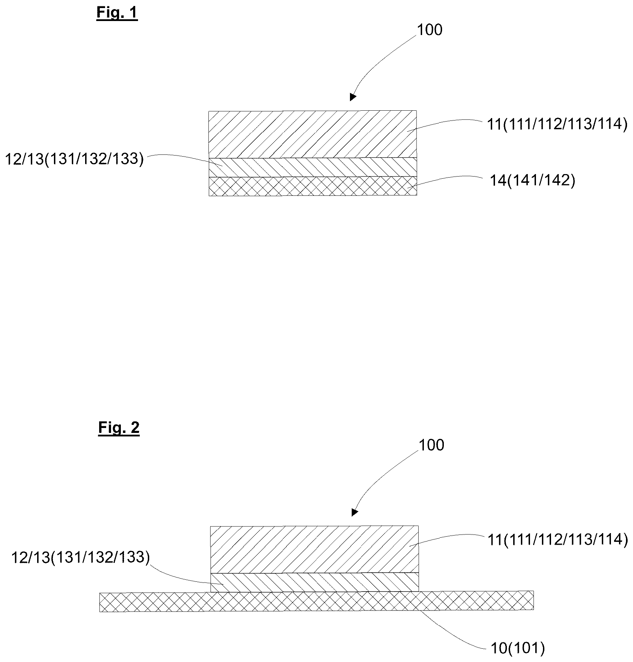

Fig. 1 zeigt ein Haftetikett 100 zur Etikettierung von (in Fig. 1 nicht gezeigten) Kunststoffschalen 10, insbesondere von PET-Kunststoffschalen 101, die zum Verpacken von Lebensmitteln ausgebildet sind. Das Haftetikett 100 besitzt ein Obermaterial 11, eine Beschichtung 12 aus einem Haftklebstoff 13 und einen Abziehstreifen 14. Der Haftklebstoff 13 weist eine Anfangshaftung FTM9 von 18 N/25 mm und ein Klebstoffauftragsgewicht von 17 g/m² auf. Alternativ weist der Haftklebstoff 13 eine Anfangshaftung FTM9 von größer/gleich 18 N/25 mm, insbesondere von größer/gleich 20 N/25 mm, und/oder ein Klebstoffauftragsgewicht von größer/gleich 17 N/25 mm, insbesondere von 18 g/m² bis 22 g/m², auf. Das Obermaterial 11 ist zur Bedruckung mit einem (nicht gezeigten) Thermodirektdrucker oder einem (nicht gezeigten) Thermotransferdrucker ausgebildet. Hierzu umfasst das Obermaterial 11 Thermopapier 111 oder Thermofolie 112 oder besteht aus Thermopapier 111 oder Thermofolie 112. Alternativ ist vorgesehen, dass das Obermaterial 11 zur Bedruckung mit einem (nicht gezeigten) UV-Drucker ausgebildet ist. Hierzu umfasst das Obermaterial 11 Papier 113 oder Folie 114 oder besteht aus Papier 113 oder Folie 114, die für den UV-Druck geeignet ist. Der Haftklebstoff 13 ist ein Hotmelt-Haftklebstoff 131 oder weist einen solchen auf. Alternativ ist vorgesehen, dass der Haftklebstoff 13 ein kautschukbasierter Haftklebstoff 132 oder ein UV-Acryl-Hotmelt-Haftklebstoff 133 ist oder einen solchen aufweist. Der Abziehstreifen 14 besteht im gezeigten Ausführungsbeispiel aus silikonisiertem Glassine 141. Alternativ besteht der Abziehstreifen aus PET. Der Abziehstreifen wird vor das Applikation das

Fig. 2 zeigt ein auf einer 10 Kunststoffschale appliziertes Haftetikett 100. Die Kunststoffschale 10 ist eine PET-Kunststoffschale 101 und ist zum Verpacken von Lebensmitteln ausgebildet.

### Bezugszeichen

- 100: Haftetikett
- 10: Kunststoffschale
- 101: PET-Kunststoffschale
- 11: Obermaterial
- 111: Thermopapier
- 112: Thermofolie
- 113: Papier
- 114: Folie
- 12: Beschichtung
- 13: Haftklebstoff
- 131: Hotmelt-Haftklebstoff
- 132: kautschukbasierte Haftklebstoff
- 133: UV-Acryl-Hotmelt-Klebstoff
- 14: Abziehstreifen
- 141: silikonisiertes Glassine
- 142: PET

## Patentansprüche

1. Haftetikett (100) zur Etikettierung von Kunststoffschalen (10), insbesondere von PET-Kunststoffschalen (101), die zum Verpacken von Lebensmitteln ausgebildet sind, mit einem Obermaterial (11) und einer Beschichtung (12) aus einem Haftklebstoff (13), **dadurch gekennzeichnet, dass** der Haftklebstoff (13) eine Anfangshaftung FTM9 von größer/gleich 18 N/25 mm und ein Klebstoffauftragsgewicht von größer/gleich 17 g/m² aufweist.

2. Haftetikett (100) nach Anspruch 1, **dadurch gekennzeichnet, dass** der Haftklebstoff (13) eine Anfangshaftung FTM9 von größer/gleich 20 N/25 mm und/oder ein Klebstoffauftragsgewicht von 18 g/m² bis 22 g/m² aufweist.

3. Haftetikett (100) nach einem der vorhergehenden Ansprüche, **dadurch gekennzeichnet, dass** das Obermaterial (11) zur Bedruckung mit einem Thermodirektdrucker oder einem Thermotransferdrucker ausgebildet ist.

4. Haftetikett (100) nach einem der vorhergehenden Ansprüche, **dadurch gekennzeichnet, dass** das Obermaterial (11) Thermopapier (111) oder Thermofolie (112) umfasst oder aus Thermopapier (111) oder Thermofolie (112) besteht.

5. Haftetikett (100) nach einem der Ansprüche 1 oder 2, **dadurch gekennzeichnet, dass** das Obermaterial (11) zur Bedruckung mit einem UV-Drucker ausgebildet ist.

6. Haftetikett (100) nach Anspruch 5, **dadurch gekennzeichnet, dass** das Obermaterial (11) Papier (113) oder Folie (114) umfasst oder aus Papier (113) oder Folie (114) besteht, die für den UV-Druck geeignet ist.

7. Haftetikett (100) nach einem der vorhergehenden Ansprüche, **dadurch gekennzeichnet, dass** der Haftklebstoff (13) ein Hotmelt-Haftklebstoff (131), ein kautschukbasierter Haftklebstoff (132) oder ein UV-Acryl-Hotmelt-Haftklebstoff (133) ist oder aufweist.

8. Haftetikett (100) nach einem der vorhergehenden Ansprüche, **dadurch gekennzeichnet, dass** das Haftetikett (100) im nichtapplizierten Zustand einen Abziehstreifen (14) aufweist, insbesondere einen Abziehstreifen (14) aus silikonisiertem Glassine (141) oder aus PET (142).
